(19) Europäisches Patentamt
European Patent Office
Office européen des brevets

(11) EP 2 631 268 A1

(12) EUROPEAN PATENT APPLICATION

(43) Date of publication:
**28.08.2013 Bulletin 2013/35**

(51) Int Cl.:
***C08K 5/13*** *(2006.01)* ***B32B 27/18*** *(2006.01)*
***B32B 27/32*** *(2006.01)*

(21) Application number: **12156515.4**

(22) Date of filing: **22.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Sainio, Markku**
  **06100 Porvoo (FI)**
- **Nummila-Pakarinen, Auli**
  **06100 Porvoo (FI)**

(74) Representative: **Maiwald Patentanwalts GmbH**
**Elisenhof**
**Elisenstrasse 3**
**80335 München (DE)**

(54) **Extrusion coating polyethylene with improved drawdown**

(57) Use of an antioxidant being a sterically hindered phenol for increasing the drawdown speed of a low density polyethylene in an extrusion coating process.

EP 2 631 268 A1

## Description

The present invention is directed to a new extrusion coated substrate as well as to the use of a primary antioxidant to enhance drawability of a low density polyethylene in an extrusion process and to the use of a primary antioxidant to prevent change of the melt flow rate of a low density polyethylene in an extrusion process. Further, the present invention is directed to an improved extrusion coating process using a composition comprising polyethylene and a primary antioxidant.

In an extrusion coating process a substrate is coated with polymer. The substrate is typically a fibrous substrate, such as paper, paperboard or Kraft paper; a metal foil, such as aluminum foil; or a plastic film, such as a biaxially oriented polypropylene film, polyethylene terephthalate (PET) film, polyamide (PA) film or cellophane film. The polymer is extruded onto the moving substrate through a flat die. The polymer melt exits the die typically at a high temperature, typically between 275 to 330 °C. After exiting the die the polymer melt is oxidized when it comes into contact with air. The oxidation improves the adhesion between the coating and the substrate. To promote the oxidation it is common in the art that the commercially available low density ethylene (LDPE) compositions designed for extrusion coating do not contain antioxidants or process stabilizers. For the purposes of the oxidation the higher end ofthe above-mentioned range, for instance, from 290 °C or from 300 °C to 330 °C, is preferred

When the melt exits the die the melt film is pulled down into a nip formed between two rollers, the pressure roll and the chill roll, situated below the die. The substrate, moving at a velocity which is higher than that of the melt film, draws the film to the required thickness. The pressure between the two rolls forces the film onto the substrate. Further, the film is cooled and solidified by the low temperature of the chill roll. The draw-down ratio, which is one of the characteristic parameters of the extrusion coating process, is the ratio of the die gap to the thickness of the polymer film on the substrate.

In a typical extrusion coating process the substrate is passed at a high velocity, typically more than 100 m/min or more than 300 m/min, and in most commercially operating machines more than 400 m/min or more than 500 m/min. Modern machines are designed to operate at lines speeds of up to 1000 m/min. In the instant application "line speed" and "draw-down speed" are considered as synonyms denoting the speed of the substrate in the coating line.

Description of extrusion coating process is given, for instance, in Crystalline Olefin Polymers, Part II, by R.A.V. Raff and K.W. Doak (Interscience Publishers, 1964), pages 478 to 484, or Plastics Processing Data Handbook, by Dominick V. Rosato (Chapman & Hall, 1997), pages 273 to 277.

Low density polyethylene (LDPE) is used in many applications as for instance in extrusion coating. It is generally known that due to the high processing temperatures used in the extrusion coating process degradation of the low density polyethylene (LDPE) occurs. Main degradation reaction is the molecular enlargement, i.e. cross-linking takes place at such high temperatures. One disadvantage of such cross-linking is that the melt flow rate of the low density polyethylene (LDPE) drastically drops. These changes are easily detectable by normal melt flow rate measurement. However such low melt flow rates are undesired as this limits the draw down speed and polymer penetration into the substrate significantly in the extrusion coating process. To avoid crosslinking typically antioxidants are used in other technical areas, however traditionally not in the technical area of extrusion coating of low density polyethylenes (LDPEs) due to negative effect on the adhesion performance. Reduced adhesion performance cannot be accepted in an extrusion coating process as it is one of the most important factors in this technology.

Accordingly the object of the present invention is to provide a concept which enables a skilled person to use low density polyethylene (LDPE) in the extrusion coating process without effecting the adhesion properties at high process speeds.

The finding of the present invention is to use a composition of low density polyethylene (LDPE) and a primary antioxidant (PAO) in the extrusion coating process.

Accordingly the present invention is directed to an article ($1^{st}$ embodiment) comprising a substrate and at least one polymer layer, said polymer layer is extrusion coated on the substrate, wherein the polymer layer comprises a composition (Co) comprising a low density polyethylene (LDPE) and a primary antioxidant (PAO), wherein
the polymer layer and/or the composition (Co) has/have a melt flow rate $MFR_2$ (190 °C) of at least 2.0 g/10min,
and wherein further the melt flow rate $MFR_2$ (190 °C) of the composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

Preferably the amount of primary antioxidant (PAO) in the composition (Co) of the 1st embodiment is in the range of 15 to 2,500 ppm and optionally at least in an amount preventing a change ofthe melt flow rate $MFR_2$ (190 °C) ofthe composition (Co) during extrusion coating of more than 40 %. Accordingly the change of the melt flow rate $MFR_2$ (190 °C) of the composition (Co) during extrusion coating shall preferably equal or below 40 %, wherein the change is defined by

$$\left| [(\text{MFR (before)} - \text{MFR (after)})/\text{MFR (before)}] \text{x} 100 \right| \leq 40,$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

Alternatively the present invention is directed to an article (2nd embodiment) comprising a substrate and at least one polymer layer, said polymer layer is extrusion coated on the substrate, wherein the polymer layer comprises a composition (Co) comprising a low density polyethylene (LDPE) and a primary antioxidant (PAO), wherein the polymer layer and/or the composition (Co) has/have a melt flow rate $MFR_2$ (190 °C) of at least 2.0 g/10min, wherein further the amount of primary antioxidant (PAO) is in the range of 15 to 2,500 ppm and at least in an amount preventing a change of the melt flow rate $MFR_2$ (190 °C) of the composition (Co) during extrusion coating of more than 40 %, i.e. the change of the melt flow rate $MFR_2$ (190 °C) of the composition (Co) during extrusion coating is equal or below 40 %, wherein the change is defined by

$$\left| [(\text{MFR (before)} - \text{MFR (after)})/\text{MFR (before)}] \text{x} 100 \right| \leq 40,$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

Preferably the melt flow rate $MFR_2$ (190 °C) of the composition (Co) in the 2nd embodiment before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

In a further aspect the present invention is directed to a process of extrusion coating (1st process) a substrate by extruding a composition (Co) in a molten state through a flat die onto said substrate at a temperature of from 275 to 330 °C, wherein said composition (Co) comprises low density polyethylene (LDPE) and from 15 to 2,500 ppm of a primary antioxidant (PAO), wherein further the amount of primary antioxidant (PAO) is at least in an amount of

(a) that the change of the melt flow rate $MFR_2$ (190 °C) of the composition (Co) during extrusion coating is equal or below 40 %, wherein the change is defined by

$$\left| [(\text{MFR (before)} - \text{MFR (after)})/\text{MFR (before)}] \text{x} 100 \right| \leq 40,$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,
and/or
(b) that the melt flow rate $MFR_2$ (190 °C) ofthe composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

Preferably the draw-down speed in the extrusion coating process (1st process) is of at least 300 m/min, preferably in the range of 300 m/min to 800 m/min.

The present invention is further directed to a process of extrusion coating (2nd process) a substrate with a draw-down speed of at least 300 m/min by extruding a composition (Co) in a molten state through a flat die onto said substrate at a temperature of from 275 to 330 °C, wherein said composition (Co) comprises low density polyethylene (LDPE) and from 15 to 2,500 ppm of a primary antioxidant (PAO).

Preferably the composition (Co) used in the extrusion coating (2nd process) comprises the primary antioxidant (PAO) at least in an amount of

(a) that the change of the melt flow rate $MFR_2$ (190 °C) of the composition (Co) during extrusion coating is equal or below 40 %, wherein the change is defined by

$$\left| [(\text{MFR (before)} - \text{MFR (after)})/\text{MFR (before)}]\text{x}100 \right| \leq 40,$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,
and/or
(b) that the melt flow rate $MFR_2$ (190 °C) ofthe composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

The two processes, i.e. the 1st and 2nd process, are especially suitable for the preparation of the articles according to the 1st and 2nd embodiment, respectively.

Additionally the present invention is directed to the use of a primary antioxidant (PAO) in a low density polyethylene (LDPE) or in a composition (Co) comprising a low density polyethylene (LDPE) to prevent a change in melt flow rate $MFR_2$ (190 °C) of the low density polyethylene (LDPE) or ofthe composition (Co) during extrusion coating of a substrate, wherein preferably

(a) that the change of the melt flow rate $MFR_2$ (190 °C) of the composition (Co) during extrusion coating is equal or below 40 %, wherein the change is defined by

$$\left| [(\text{MFR (before)} - \text{MFR (after)})/\text{MFR (before)}]\text{x}100 \right| \leq 40,$$

wherein
MFR (after) is the melt flow rate $MFR_2$ (190 °C) of the low density polyethylene (LDPE) after extrusion coating or ofthe composition (Co) after extrusion coating;
MFR (before) is the melt flow rate $MFR_2$ (190 °C) of the low density polyethylene (LDPE) before extrusion coating

or of the composition (Co) before extrusion coating,
and/or
(b) that the melt flow rate $MFR_2$ (190 °C) of the low density polyethylene (LDPE) or of the composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the low density polyethylene (LDPE) after extrusion coating or ofthe composition (Co) after extrusion coating;
MFR (before) is the melt flow rate $MFR_2$ (190 °C) of the low density polyethylene (LDPE) before extrusion coating or of the composition (Co) before extrusion coating.

In a further aspect the present invention is directed to the use of a primary antioxidant (PAO) for increasing the drawdown speed of a low density polyethylene (LDPE) or a composition (Co) comprising a low density polyethylene (LDPE) in an extrusion coating process of substrate, wherein preferably the increase of drawdown speed is at least 20 %, determined as the undeckeled drawdown speed at which the extruded polymer film breaks, the percentage is calculated by the formula

$$\frac{DD(LDPE + PAO) - DD(LDPE)}{DD(LDPE)}\ x\ 100$$

wherein

DD(LDPE) is the undeckeled drawdown speed [m/min] at which the polymer film breaks, the polymer film is obtained from the composition (Co) without the primary antioxidant (PAO) or from the low density polyethylene (LDPE) without the primary antioxidant (PAO),

DD(LDPE + PAO) is the undeckeled drawdown speed [m/min] at which the polymer film breaks, the polymer film is obtained from the same composition (Co) containing the primary antioxidant (PAO) or from the same low density polyethylene (LDPE) containing the primary antioxidant (PAO).

In the following the invention is described in more detail.

When in the following reference is made to preferred embodiments or technical details of the inventive articles, it is to be understood that these preferred embodiments or technical details also refer to the inventive extrusion coating processes as well as to the inventive use described herein. If, for example, it is set out that the primary antioxidant (PAO) in the composition (Co) of the article is preferably a sterically hindered phenol, also the primary antioxidant (PAO) provided in the inventive processes and uses is preferably a sterically hindered phenol.

According to the invention the article must comprise a substrate and at least one extrusion coated layer based on the composition (Co).

According to the instant invention the terms "polymer layer" and "extrusion coated layer" define the same subject, namely the polymer layer which is extrusion coated on the substrate and thus are interchangeable.

The substrate to be coated can be any substrate known in the art. Preferably the substrate is selected from the group consisting of a fibrous substrate, such as paper, paperboard or Kraft paper; a metal foil, such as aluminum foil; and a plastic film, such as a biaxially oriented polypropylene film, a polyethylene terephthalate (PET) film, a polyamide (PA) film or a cellophane film.

As mentioned above the substrate is extrusion coated and thus at least one surface of the substrate is coated. It is however within the scope of the invention that both sides of the substrate, i.e. the outer and inner surface (side) ofthe substrate is extrusion coated. Accordingly the polymer layer according to this invention is in directed contact with the substrate. The term "direct contact" covers also embodiments in which the polymer layer has been subjected to ozone treatment and the substrate has been subjected to corona treatment or flame treatment, respectively, for improving the adhesion between the polymer layer and the substrate.

In one preferred embodiment the polymer layer, i.e. the extrusion coated layer, is the surface layer of the instant article. "Surface layer" according to this invention means that no further layer between the surface layer of the article

and the environment is placed.

The article of the present invention must at least comprise the extrusion coated substrate and may consist of the extrusion coated substrate depending on the end use. Typically the articles are juice cartons, milk cartons and the like. However the articles according to this invention may also flexible packaging and industrial packaging articles, as well as disposable cups, plates and the like. Accordingly in its broadest meaning the instant article is the extrusion coated substrate as such.

The polymer layer of the extrusion coated substrate has preferably a thickness in the range of 5 to 1,000 μm, more preferably in the range of 10 to 100 μm. The specific thickness will be selected according to the nature of the substrate, its expected subsequent handling conditions and, most importantly, the subsequent use of the end product. The thickness of the substrate may generally be chosen freely and has no effect on the coating process. It can typically be from 1 to 1,000 μm. e.g. 5 to 300 μm.

The extrusion coating process is preferably carried out using conventional extrusion coating techniques. Hence, the polymer composition (Co) is fed to an extruding device. From the extruder the polymer melt is passed through a flat die to the substrate to be coated. Due to the distance between the die lip and the nip, the molten plastic is oxidized in the air for a short period, usually leading to an improved adhesion between the extrusion coated layer and the substrate. The coated substrate is cooled on a chill roll, after which it is passed to edge trimmers and wound up.

The die width typically depends on the size of the extruder used. Thus with 90 mm extruders the width may suitably be within the range of 600 to 1,200 mm, with 115 mm extruders from 900 to 2,500 mm, with 150 mm extruders from 1,000 to 4,000 mm and with 200 mm extruders from 3,000 to 5,000 mm.

Preferably the line speed (draw-down speed) is more than 100 m/min, more preferably more than 300 m/min, and in most commercially operating machines more than 400 m/min or more than 500 m/min. Modern machines are designed to operate at lines speeds of up to 1,000 m/min. Accordingly in one preferred embodiment the line speed (draw-down speed) is of up to 1,500 m/min and preferably up to 1,200 m/min, and therefore the line speed (draw-down speed) is preferably in the range of equal or more than 300 to 1,500 m/min, more preferably in the range of 300 to 1,400 m/min or in the range of 500 to 1,400 m/min, like in the range of 300 to 800 m/min or in the range of 500 to 1,200 m/min.

The temperature ofthe polymer melt, i.e. of the composition (Co) melt, is typically between 270 and 330 °C, like in the range of 275 to 330 °C.

It is also possible to employ a coating line with at least two extruders to make it possible to produce multilayered coatings with different polymers. It is also possible to have arrangements to treat the polymer melt exiting the die to improve adhesion, e.g. by ozone treatment, and/or the substrate with corona treatment or flame treatment. For the corona treatment, for instance the substrate is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the substrate surface is ionized and reacts with the molecules of the substrate surface. An overview of the different techniques is given, for instance, by David A Markgraf of Enercon Industries Corporation in http://www.enerconind.com/files/7f/7fb3c045-dee6-461c-b508-259b816d0bf4.pdf (see pages 2 to 8 for flame treatment, 9 to 20 for corona treatment and 20 to 21 for ozone treatment).

According to the instant invention the polymer layer must comprise the composition (Co). Preferably the composition (Co) constitutes the main part of the polymer layer. Accordingly the polymer layer comprises at least 50 wt.-%, more preferably at least 70 wt.-%, still more preferably at least 85 wt.-%, yet more preferably 95 wt.-%, still yet more preferably consists of, the composition (Co). Accordingly it is appreciated that the polymer layer comprises 70 to 100 wt.-%, like 70 to 90 wt.-%, more preferably 85 to 100 wt.-%, like 85 to 90 wt.-%, yet more preferably 95 to 100 wt.-%, like 95 to 99 wt.-%, ofthe composition (Co).

Preferably the polymer layer has a melt flow rate $MFR_2$ (190°C) of at least 2.0 g/10min, more preferably has a melt flow rate $MFR_2$ (190°C) in the range of 2.0 to 15.0 g/10min, yet more preferably has a melt flow rate $MFR_2$ (190°C) in the range of 2.5 to 15.0 g/10min, still more preferably in the range of 3.5 to 10.0 g/10min, still yet more preferably in the range of 4.2 to 9.0 g/10min. The same values and ranges apply for the melt flow rate $MFR_2$ (190°C) of the composition (Co) being part of the polymer layer after the extrusion coating process.

On the other hand the melt flow rate $MFR_2$ (190°C) of the polymer composition (Co) prior the extrusion coating process may be higher. Accordingly the melt flow rate $MFR_2$ (190°C) of the polymer composition (Co) prior the extrusion coating process is at least 2.5 g/10min, more preferably has a melt flow rate $MFR_2$ (190°C) in the range of 2.5 to 20.0 g/10min, yet more preferably in the range of 4.0 to 15.0 g/10min.

One advantage of the present invention is that the melt flow rate $MFR_2$ (190°C) of the low density polyethylene (LDPE) and thus of the polymer composition (Co) is only little - if at all - effected by the extrusion coating process. Accordingly the melt flow rate $MFR_2$ (190 °C) ofthe composition (Co) before and after extrusion are substantially the same, i.e.

$$1.5 \geq \frac{MFR\ (after)}{MFR\ (before)} \geq 0.5,$$

more preferably

$$1.4 \geq \frac{MFR\ (after)}{MFR\ (before)} \geq 0.7,$$

yet more preferably

$$1.3 \geq \frac{MFR\ (after)}{MFR\ (before)} \geq 0.8$$

wherein

MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

The polymer composition (Co) according to this invention must comprise a low density polyethylene (LDPE) and a primary antioxidant (PAO). Accordingly the polymer composition (Co) may comprise further polymers and in particular further additives not explicitly mentioned in the instant invention. Therefore the polymer composition comprises at least 50 wt.-%, more preferably at least 70 wt.-%, yet more preferably at least 80 wt.-%, like 80 to 100 wt.-% or 80 to 90 wt.-%, still more preferably at least 90 wt.-%, like 90 to 99 wt.-% or 90 to 100 wt.-%, of the low density polyethylene (LDPE), wherein the weight percentage is based on all polymers present in the polymer composition. In a preferred embodiment the low density polyethylene (LDPE) is the only polymer in the composition (Co).

The low density polyethylene (LDPE) preferably is a low density homopolymer of ethylene (referred herein as LDPE homopolymer). The low density polyethylene (LDPE) is a polyethylene produced in a high pressure process (HP). Typically the polymerization of ethylene and optional further comonomer(s) in the high pressure process (HP) is carried out in the presence of an initiator(s). Such processes are disclosed in, among others, WO-A-96/016119, EP-A-1,777,238, EP-A-1,167,396, DE-A-10 351 262 and WO-A-2007/134671.

The meaning of low density polyethylene (LDPE) is well known and documented in the literature. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE), preferably the low density polyethylene (LDPE) homopolymer, may be unsaturated.

In case the low density polyethylene (LDPE) is a copolymer it comprises typical comonomers, like acrylates, methacrylates and acetates.

Typically, and preferably the density of the low density polyethylene (LDPE) is higher than 860 kg/m$^3$. Preferably the density of the low density polyethylene (LDPE), i.e. ofthe LDPE homopolymer or copolymer, is not higher than 940 kg/m$^3$, and preferably is from 900 to 930 kg/m$^3$.

The melt flow rate $MFR_2$ (2.16 kg, 190 °C) of the low density polyethylene (LDPE) is preferably at least 2.5 g/10min, more preferably has a melt flow rate $MFR_2$ (190°C) in the range of 2.5 to 20 g/10min, yet more preferably in the range of 4 to 15 g/10min.

As mentioned the low density polyethylene (LDPE) is preferably produced at high pressure by free radical initiated polymerization (referred to as high pressure (HP) radical polymerization). The high pressure (HP) reactor can be e.g. a well known tubular or autoclave reactor or a mixture thereof, preferably an autoclave reactor. The high pressure (HP) polymerization and the adjustment of process conditions for further tailoring the other properties of the polyolefin depending on the desired end application are well known and described in the literature, and can readily be used by a skilled person. Suitable polymerization temperatures range up to 400 °C, preferably from 150 to 350°C and pressure from 70 MPa, preferably 100 to 400 MPa, more preferably from 100 to 350 MPa. Pressure can be measured at least after compression stage and/or after the autoclave reactor. Temperature can be measured at several points during all steps. Description of the polymerization process may be found in the above-mentioned documents WO-A-96/016119, EP-A-1,777,238, EP-A-1,167,396, DE-A-10 351 262 and WO-A-2007/13467 as well as in EP-A-2,123,707 and Vieweg,

Scley and Schwartz, Kunststoff Handbuch, Band IV, Polyolefine, Carl Hanser Verlag (1969), pages 39 to 51.

Further details of the production of ethylene polymers by high pressure radical polymerization can be found i.e. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

Essential further component in the composition (Co) is the primary antioxidant (PAO). It is the finding of the present invention, that not any antioxidant (AO) can be used but only a primary antioxidant (PAO).

Antioxidants are commonly divided into primary antioxidants (PAO) which are capable of reacting with free radicals formed, for instance, during an oxidation process, and secondary antioxidants (SAO), which are capable of reacting with the degradation products resulting from a reaction between a radical and a primary antioxidant (PAO). Examples of primary antioxidants (PAO) are, among others, compounds containing a sterically hindered phenol group, which are preferably used in the instant invention. Examples of secondary antioxidants (SAO) are, among others, sulphur-containing antioxidants and phosphorous-containing antioxidants such as phosphites and phosphonites.

It has been surprisingly found that the primary antioxidants (PAO) prevent cross-linking of the low density polyethylene (LDPE) during the extrusion coating process and thus keeps the drawdown speed on high levels without compromising the adhesion behavior of the low density polyethylene (LDPE). Such an effect cannot observed when using secondary antioxidants (SAO).

The term "Sterically hindered" according to this invention means that at least one α-position to the hydroxyl group (HO-) ofthe phenol bears an alkyl residue. Preferably both α-positions to the hydroxyl group (HO-) ofthe phenol bear alkyl residues. Accordingly in one specific embodiment the primary antioxidant (PAO) is a sterically hindered phenol which comprises at least the residue

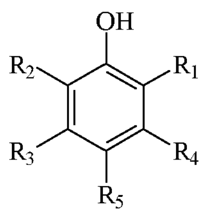

wherein

$R_1$ and $R_2$ are independently selected from the group consisting of H, $CH_3$, $CH_2(CH_2)_nCH_3$, $C(CH_3)_3$, and $CH(CH_3)_2$, with n = 0 to 5 and with the proviso that only either $R_1$ or $R_2$ can be H, and

$R_3$, $R_4$, $R_5$ are independently H or an organic residue.

"Organic residue" means any residue comprising C atoms and optionally typical heteroatoms as used in the organic chemistry, like oxygen atoms and nitrogen atoms. The $R_5$ residue may bear aromatic groups.

Preferably $R_3$ and $R_4$ are independently H or an alkyl residue, the alkyl residue may form a five or six membered ring with the $R_5$ organic residue. For instance the five- or six-membered ring may be fused to the aromatic ring ofthe phenol (as in 2,5,7,8-tetramethyl-2(4',8',12'-trimethyltridecyl)chroman-6-ol). In case the alkyl residue does not form a ring with the $R_5$ residue, the $R_3$ and $R_4$ are independently selected from the group consisting of H, $CH_3$, $CH_2(CH_2)_nCH_3$, $C(CH_3)_3$, and $CH(CH_3)_2$, with n = 0 to 5, more preferably $R_3$ and $R_4$ are independently from each other either H or $CH_3$.

Preferably the $R_5$ residue is free of phosphor atoms, more preferably is free of phosphor atoms and sulphur atoms. In one preferred embodiment the primary antioxidant (PAO) being a sterically hindered phenol is free of phosphor atoms, more preferably is free of phosphor atoms and sulphur atoms. Accordingly it is preferred that the primary antioxidant (PAO) being a sterically hindered phenol comprises C, H, O, N and S atoms only, more preferably comprises C, H and O atoms only.

Considering the above requirements the primary antioxidant (PAO) being a sterically hindered phenol preferably is selected from the group consisting of 2,6-di-tert. butyl -4-methyl phenol,
pentaerythrityl-tetrakis(3-(3',5'-di-tert. butyl-4-hydroxyphenyl)-propionate,
octadecyl 3-(3',5'-di-tert. butyl-4-hydroxyphenyl)propionate,
1,3,5-tri-methyl-2,4,6-tris-(3,5-di-tert. butyl-4-hydroxyphenyl) benzene,
1,3,5-tris(3',5'-di-tert. butyl-4'-hydroxybenzyl)-isocyanurate,
bis-(3,3-bis-(4-'-hydroxy-3'-tert. butylphenyl)butanic acid)-glycolester,
2,2'-metilene-bis(6-(1-methyl-cyclohexyl) para-cresol),
N,N'-hexamethylene bis(3,5-di-tert. butyl-4-hydroxy-hydrocinnamamide),
2, 5,7,-8-tetramethyl-2(4',8',12'-trimethyltridecyl)chroman-6-ol,
2,2'-ethylidenebis (4,6-di-tert. butylphenol),
1,1,3-tris (2-methyl-4-hydroxy-5-tert. butylphenyl) butane,

1,3,5-tris(4-tert. butyl-3-hydroxy-2,6-dimethylbenzyl)-1,3,5-triazine-2,4,6-(1H,3H,5H)-trione,
3,9-bis(1,1-dimethyl-2-(beta-(3-tert. butyl-4-hydroxy-5-methylphenyl) propionyloxy) ethyl) - 2,4,8,10-tetraoxaspiro (5,5) undecane,
1,6-hexanediyl-bis(3,5-bis(1,1-dimethylethyl)-4-hydroxybenzene-propanoate),
2,6-di-tert. butyl-4-nonylphenol,
4,4'-butylidenebis(6-tert. butyl-3-methylphenol),
2,2'-methylene bis(4-methyl-6-tert. butylphenol), and
triethyleneglycol- bis-(3-tert. butyl-4-hydroxy-5 methylphenyl) propionate.

More preferably the primary antioxidant (PAO) being a sterically hindered phenol preferably is selected from the group consisting of
pentaerythrityl-tetrakis (3-(3,5-di-tert-butyl-4-hydroxyphenyl) propionate (CAS no. 6683-19-8),
octadecyl 3-(3',5'-di-tert-butyl-4-hydroxyphenyl)propionate (CAS no. 2082-79-3), bis(3,3-bis(3'-tert-butyl-4'-hydroxyphenyl)butanic acid) glycolester (CAS no. 32509-66-3), N,N'-hexamethylene bis(3,5-di-tert. butyl-4-hydroxy-hydrocinnamamide, (CAS no. 23128-74-7), and
2,5,7,8-tetramethyl-2(4',8',12'-trimethyltridecyl)chroman-6-ol (CAS no. 10191-41-0).

The most preferred the primary antioxidant (PAO) being a sterically hindered phenol is pentaerythrityl-tetrakis (3-(3',5'-di-tert-butyl-4-hydroxyphenyl)-propionate (CAS no. 6683-19-8) or 2,5,7,8-tetramethyl-2(4',8',12'-trimethyltridecyl)chroman-6-ol (CAS no. 10191-41-0).

The amount of primary antioxidant (PAO) in the composition must be carefully chosen. On the one hand the amount of primary antioxidant (PAO) shall be not too high otherwise the adhesion performance is suppressed and on the other hand it should be not too low otherwise crosslinking occurs during the extrusion process and thus an undesired drop of melt flow rate can be observed. In other words the primary antioxidant (PAO) must be present in such an amount that the melt flow rate $MFR_2$ of the composition (Co) and/or of the low density polyethylene (LDPE) remains substantially unchanged during the extrusion coating process and the adhesion performance of the polymer layer remains intact.

Accordingly it is preferred that the amount of primary antioxidant (PAO) is preferably in the range of 15 to 2,500 ppm more preferably in the range of 30 to 2000 ppm, still more preferably in the range of 50 to 2000 ppm, yet more preferably in the range of 100 to 2000 ppm. In one preferred embodiment the composition comprises 500 to 2000 ppm of primary antioxidant not being 2,5,7,8-tetramethyl-2(4',8',12'-trimethyltridecyl)chroman-6-ol or 25 to 1000 ppm of primary antioxidant being 2,5,7,8-tetramethyl-2(4',8',12'-trimethyltridecyl)chroman-6-ol. The values are preferably understood as the amounts present in the composition (Co) before the extrusion process, i.e. added into the composition (Co) and/or into the low density polyethylene (LDPE). In other words the amount of the primary antioxidant (PAO) in the polymer layer after extrusion might be different and tend be lower than in the composition (Co) before extrusion.

Further the exact amount of primary antioxidant (PAO) is dependent on the specific selected primary antioxidant (PAO). For instance when using pentaerythrityl-tetrakis (3-(3',5'-di-tert-butyl-4-hydroxyphenyl)-propionate (CAS no. 6683-19-8) the amount needed is higher than for 2,5,7,8-tetramethyl-2(4',8',12'-trimethyltridecyl)chroman-6-ol (CAS no. 10191-41-0). In other words the ranges provided in the previous paragraph are a technical guidance for the skilled artisan in which he must select the exact amount of primary antioxidant (PAO) to avoid a change of melt flow rate $MFR_2$ of the composition (Co) and/or of the low density polyethylene (LDPE) during the extrusion coating process. To be more precisely the exact amount for each primary antioxidant (PAO) within the above given ranges must be chosen in way that the melt flow rate $MFR_2$ (190°C) of the low density polyethylene (LDPE) and thus of the polymer composition (Co) before and after extrusion are substantially the same, i.e.

$$1.5 \geq \frac{MFR\ (after)}{MFR\ (before)} \geq 0.5,$$

more preferably

$$1.4 \geq \frac{MFR\ (after)}{MFR\ (before)} \geq 0.7,$$

yet more preferably

$$1.3 \geq \frac{MFR\ (after)}{MFR\ (before)} \geq 0.8$$

wherein

MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

Alternatively or additionally it can be said that the amount of primary antioxidant (PAO), preferably the amount primary antioxidant (PAO) within the above given ranges, must be chosen in way to prevent a change of the melt flow rate $MFR_2$ (190 °C) of the composition (Co) and/or of the low density polyethylene (LDPE) during extrusion coating process of more than 40 %, i.e. the change ofthe melt flow rate $MFR_2$ (190 °C) of the composition (Co) and/or of the low density polyethylene (LDPE) during extrusion coating is
I [(MFR (before) - MFR (after))/MFR (before)]x100| ≤ 40, i.e. equal or below 40 %, more preferably
I [(MFR (before) - MFR (after))/MFR (before)]x100| ≤ 30, i.e. equal or below 30 %, yet more preferably
| [(MFR (before) - MFR (after))/MFR (before)]x100| ≤ 20, i.e. equal or below 20 %, still yet more preferably
I [(MFR (before) - MFR (after))/MFR (before)]x100| ≤ 15, i.e. equal or below 15 %, wherein
MFR (after) is the melt flow rate $MFR_2$ (190 °C) of the low density polyethylene (LDPE) after extrusion coating or of the composition (Co) after extrusion coating;
MFR (before) is the melt flow rate $MFR_2$ (190 °C) of the low density polyethylene (LDPE) before extrusion coating or of the composition (Co) before extrusion coating.

The composition (Co) and/or the polymer layer may comprise further additives known in the art, like antiblocks, fillers, pigments, nucleating agents, slip agents and antistatic agents. However it is preferred that the polymer layer and/or the composition (Co) does/do not contain sulphur-containing antioxidants and/or phosphorous-containing antioxidants, such as phosphites and phosphonites, more preferably does/do not contain any secondary antioxidants (SAO). The further additives, i.e. the additives other than the primary antioxidants (PAO), are present in an amount not exceeding 5.0 wt.-%, more preferably being in the range of 0.001 to 5.0 wt.-%, like in the range of 0.01 to 3.0 wt.-%, based on the composition (Co) and/or the low density polyethylene (LDPE).

The composition (Co) in accordance with the present invention may be prepared by compounding the components within suitable melt mixing devices for preparing polymeric compounds, including in particular extruders, like single screw extruders as well as twin screw extruders. Other suitable melt mixing devices include planet extruders and single screw co-kneaders.

As mentioned above, the present invention is not only directed to an article comprising the composition (Co) and the manufacture of said article but also to the use of the primary antioxidant (PAO) for increasing the drawdown speed of a low density polyethylene (LDPE) or of a composition (Co) comprising a low density polyethylene (LDPE) in an extrusion coating process. More preferably the present invention is directed to the use of the primary antioxidant (PAO) for increasing the drawdown speed of a low density polyethylene (LDPE) or a composition (Co) comprising a low density polyethylene (LDPE) in an extrusion coating process for producing an polymer layer on a substrate. Accordingly it is appreciated that prior to the extrusion coating process the primary antioxidant (PAO) is mixed with the low density polyethylene (LDPE) and the composition (Co), respectively.

The increase of drawdown speed preferably is at least 20 %, more preferably is 20 to 50 %, more preferably 30 to 45 %, determined as the undeckeled drawdown speed at which the extruded polymer film breaks, the percentage is calculated by the formula

$$\frac{D(LDPE + PAO) - D(LDPE)}{D(LDPE)} x\,100$$

wherein

D(LDPE) is the undeckeled drawdown speed [m/min] at which the polymer film breaks, the polymer film is obtained from the composition (Co) without the primary antioxidant (PAO) or from the low density polyethylene (LDPE) without the primary antioxidant (PAO),
D(LDPE + PAO) is the undeckeled drawdown speed [m/min] at which the polymer film breaks, the polymer film is obtained from the same composition (Co) containing the primary antioxidant (PAO) or from the same low density polyethylene (LDPE) containing the primary antioxidant (PAO).

Additionally the present invention is directed to the use of a primary antioxidant (PAO) in a low density polyethylene (LDPE) or in a composition (Co) comprising a low density polyethylene (LDPE) to prevent a change in melt flow rate $MFR_2$ (190 °C) of the low density polyethylene (LDPE) or ofthe composition (Co) during extrusion coating of

a substrate, wherein preferably

(a) the change ofthe melt flow rate $MFR_2$ (190 °C) of the composition (Co) and/or of the low density polyethylene (LDPE) during extrusion coating is

$$\left| [(\mathrm{MFR\ (before)} - \mathrm{MFR\ (after)})/\mathrm{MFR\ (before)}]\mathrm{x}100 \right| \leq 40,$$

i.e. equal or below 40 %, more preferably

$$\left| [(\mathrm{MFR\ (before)} - \mathrm{MFR\ (after)})/\mathrm{MFR\ (before)}]\mathrm{x}100 \right| \leq 30,$$

i.e. equal or below 30 %,
yet more preferably

$$\left| [(\mathrm{MFR\ (before)} - \mathrm{MFR\ (after)})/\mathrm{MFR\ (before)}]\mathrm{x}100 \right| \leq 20,$$

i.e. equal or below 20 %,
still yet more preferably

$$\left| [(\mathrm{MFR\ (before)} - \mathrm{MFR\ (after)})/\mathrm{MFR\ (before)}]\mathrm{x}100 \right| \leq 15,$$

i.e. equal or below 15 %,
wherein
MFR (after) is the melt flow rate $MFR_2$ (190 °C) of the low density polyethylene (LDPE) after extrusion coating or ofthe composition (Co) after extrusion coating; MFR (before) is the melt flow rate $MFR_2$ (190 °C) of the low density polyethylene (LDPE) before extrusion coating or of the composition (Co) before extrusion coating,
and/or
(b) that the melt flow rate $MFR_2$ (190 °C) of the low density polyethylene (LDPE) or of the composition (Co) before and after extrusion are substantially the same, i.e.

$$1.5 \geq \frac{MFR\ (after)}{MFR\ (before)} \geq 0.5,$$

more preferably

$$1.4 \geq \frac{MFR\ (after)}{MFR\ (before)} \geq 0.7,$$

yet more preferably

$$1.3 \geq \frac{MFR\ (after)}{MFR\ (before)} \geq 0.8$$

wherein
MFR (after) is the melt flow rate $MFR_2$ (190 °C) of the low density polyethylene (LDPE) after extrusion coating or ofthe composition (Co) after extrusion coating;
MFR (before) is the melt flow rate $MFR_2$ (190 °C) of the low density polyethylene (LDPE) before extrusion coating or of the composition (Co) before extrusion coating.

For the preferred embodiments of the substrate, the polymer layer, the composition (Co), the low density polyethylene (LDPE) and the primary antioxidant (PAO) reference is made to the information provided above when discussing the article and the process for making the article according to the instant invention. Accordingly it is in particular preferred that the used primary antioxidant (PAO) is a sterically hindered phenol, more preferably a sterically hindered phenol comprising at least the residue

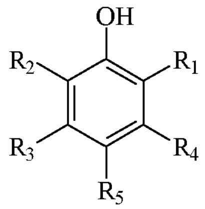

wherein
$R_1$ and $R_2$ are independently selected from the group consisting of H, $CH_3$, $CH_2(CH_2)_nCH_3$, $C(CH_3)_3$, and $CH(CH_3)_2$, with n = 0 to 5 and with the proviso that only either $R_1$ or $R_2$ can be H, and
$R_3$, $R_4$, $R_5$ are independently H or an organic residue.

More preferably the used primary antioxidant (PAO) is selected from the group consisting of pentaerythrityl-tetrakis (3-(3,5-di-tert-butyl-4-hydroxyphenyl) propionate (CAS no. 6683-19-8), octadecyl 3-(3',5'-di-tert-butyl-4-hydroxyphenyl)propionate (CAS no. 2082-79-3), bis(3,3-bis(3'-tert-butyl-4'-hydroxyphenyl)butanic acid) glycolester (CAS no. 32509-66-3), N,N'-hexamethylene bis(3,5-di-tert. butyl-4-hydroxy-hydrocinnamamide, (CAS no. 23128-74-7), and 2,5,7,8-tetramethyl-2(4',8',12'-trimethyltridecyl)chroman-6-ol (CAS no. 10191-41-0).

The most preferred the used primary antioxidant (PAO) is pentaerythrityl-tetrakis (3-(3',5'-di-tert-butyl-4-hydroxyphenyl)-propionate (CAS no. 6683-19-8) or 2,5,7,8-tetramethyl-2(4',8',12'-trimethyltridecyl)chroman-6-ol (CAS no. 10191-41-0).

In the following, the present invention is described by way of examples.

## EXAMPLES

### A. Measuring methods

The following definitions of terms and determination methods apply for the above general description of the invention as well as to the below examples unless otherwise defined.

**The concentration of antioxidant** in the polymer was determined by the liquid chromatography. The concentration of antioxidants was investigated by using HPLC method. First, it was necessary to specify polymers starting concentration of antioxidant. This was done by using the polymer granulates, which were collected during the test runs. The antioxidants were extracted out of the polymer pieces by using solvent. This solution was heated up to 80 °C for 60 minutes in an aluminium heat block combined with a magnetic stirring system. After the solution was cooled, it was filtered and put into the HPLC equipment. Three parallel samples were done and the average of these was taken as a result. The unit of the results is parts per million (ppm)."
ppm: means parts per million by weight.

**Melt Flow Rate (MFR)**

The melt flow rates are measured with a load of 2.16 kg ($MFR_2$) at 190 °C. The melt flow rate is that quantity of polymer in grams which the test apparatus standardised to ISO 1133 extrudes within 10 minutes at a temperature of 190 °C under a load of 2.16 kg.

The MFR of the coating layer was determined as follows:

> The coating layer was ripped off the substrate and collected. Then, the coating was cut into little pieces using scissors and the pieces were put into an automatic press. The automatic press was used for removing the air from the sample. In the automatic press, the pieces of polymer film melted and formed a sample plate. The plate (devoid of bubbles) was then cut into small pieces and these pieces were used for MFR measurement as discussed above. Manufacturing sample plates with the automatic press was done according to ISO 293.

**Density**

Low density polyethylene (LDPE): The density was measured according to ISO 1183-2. The sample preparation was executed according to ISO 1872-2 Table 3 Q (compression moulding).

**Draw down speed** DD (10g/$m^2$) was determined by keeping the coating weight constant (10 g/ $m^2$) during the testing period. The starting line speed was 100 m/min and it was increased stepwise with steps of 100 m/min in five seconds time until the film breaks or 600 m/min was reached.

**Neck-in** was determined as the difference between the width of the die opening and the width of the coating on the substrate.

**The adhesion test** is made for evaluating the adhesion between the substrate and the coating. The coating and the substrate were manually torn from each other. Same operator tested the samples of the comparative example and the example. A ranking from 1 to 5 was given as follows:

1 The coating peels very easily from the substrate. The coating does not tear the substrate at all when separated.
2 The coating can be separated from the substrate easily but parts of the substrate follow with the separated coating.
3 The coating is adhered almost completely to the substrate but can still be peeled off from small areas.
4 The coating is adhered well to the substrate. It may be possible by slow tearing to remove the coating from small areas.
5 It is not possible to separate the coating and the substrate. Attempts will result in tearing of the substrate.

**B. Examples**

**PE1** is the commercial low density polyethylene (LDPE) CA7230 of Borealis AG having a density of 923 kg/$m^3$ and a melt flow rate $MFR_2$ (190°C) of 4.5 g/10min.

**PE2** is the commercial low density polyethylene (LDPE) FA7220 of Borealis AG having a density of 922 kg/$m^3$ and a melt flow rate $MFR_2$ (190°C) of 4.0 g/10min. It contains 125 ppm of 2,5,7,8-tetramethyl-2(4',8',12'-trimethyltridecyl) chroman-6-ol (A03).

**AO1** is the commercial antioxidant Irganox 1010 (pentaerythrityl-tetrakis (3-(3',5'-di-tert-butyl-4-hydroxyphenyl)-propionate) of BASF.

**A02** is the commercial antioxidant Irgafos 168 (tris (2,4-di-t-butylphenyl) phosphite) of

BASF.

**A03** is the antioxidant 2,5,7,8-tetramethyl-2(4',8',12'-trimethyltridecyl)chroman-6-ol.

**1st Trial**

In a first trial the melt flow behaviour of the compositions were tested.

Extrusion coating runs were made on Beloit coextrusion coating line. It had Peter Cloeren's EBR die and a five layer feed block. The width of the line was 850 to 1,000 mm and the maximum possible line speed was 1,000 m/min. The line speed was maintained at 100 m/min.

In the EBR die (EBR stands for "edge bead reduction") two deckles, an upper and a lower deckle are adjusted to minimize the edge beads. The deckling is shown as the position of the deckles in mm from the starting, open, position. The first number indicates the position of the upper deckle and the second number the position of the lower deckle. For instance, deckling 70/30 means that the upper deckle has been moved to a position of 70 mm from the edge of the die and the lower deckle to 30 mm from the edge of the die.

In the coating line above PET film was coated with a layer of a composition (Co) according to the present invention having a basis weight of 30 g/$m^2$. The temperature of the equipment was set to 320 °C.

**Table 1:** Composition (Co) before extrusion coating and after extrusion coating

| | | CE 1 | CE 1 | CE 2 | CE 2 | CE 3 | CE 3 | E1 | E1 | E2 | E2 |
|---|---|---|---|---|---|---|---|---|---|---|---|
| | | before | after | before | after | before | after | before | after | before | after |
| PE1 | [wt.-%]* | 100 | 100 | 100 | 100 | 50 | 50 | 100 | 100 | 0 | 0 |
| PE2 | [wt.-%]* | 0 | 0 | 0 | 0 | 50 | 50 | 0 | 0 | 100 | 100 |
| AO1 | [ppm]** | 0 | 0 | 300 | 170 | 0 | 0 | 1,500 | 1,020 | 0 | 0 |
| A02 | [ppm]** | 0 | 0 | 1,200 | 1060 | 0 | 0 | 0 | 0 | 0 | 0 |
| A03 | [ppm]** | 0 | 0 | 0 | 0 | 75 | <10 | 0 | 0 | 125 | 30 |

(continued)

| | | CE 1 | CE 1 | CE 2 | CE 2 | CE 3 | CE 3 | E1 | E1 | E2 | E2 |
|---|---|---|---|---|---|---|---|---|---|---|---|
| | | before | after | before | after | before | after | before | after | before | after |
| $MFR_2$ | [g/ 10min] | 4.5 | 1.4 | 4.5 | 2.1 | 4.0 | 1.9 | 4.5 | 4.8 | 4.0 | 4.4 |
| "before" means measurements on the composition (Co) have been undertaken before extrusion coating<br>"after" means measurements on the polymer layer obtained from the composition (Co) have been undertaken after extrusion coating<br>* based on the amount of the polymers present in the composition (Co)<br>** based on the amount of the total composition(Co) | | | | | | | | | | | |

**2nd Trial**

In a second trial the extrusion coating behaviour of the compositions (Co) were analysed. Extrusion coating runs were made on Beloit coextrusion coating line. It had Peter Cloeren's die and a five layer feed block. The width of the line was 850 to 1,000 mm and the maximum possible line speed was 1,000 m/min. The line speed was gradually increased from 100 m/min to 500 m/min in case ofthe resin of CE1 and to 600 m/min in case ofthe resin E1 (E1 did not exhibit a line break at any line speed until 600 m/min)

In the coating line above UG Kraft paper having a basis weight of 70 g/m$^2$ was coated with a polymer layer of a composition (Co) according to the present invention having a basis weight of 10 g/m$^2$. The temperature of the equipment was set to 320 °C.

**Table 2:** extrusion coating behaviour of the compositions

| | | CE 1 | E1 |
|---|---|---|---|
| DD speed (0/0) | [m/min] | 500 | >600 |
| DD speed (70/30) | [m/min] | 360 | 480 |
| Neck-in at 300 m/min (0/0) | [mm] | 46 | 54 |
| Neck-in at 300 m/min (70/30) | [mm] | 62 | 69 |
| Adhesion at 500 m/min | [-] | 1.5 | 1.5 |

## Claims

1. Article comprising a substrate and at least one polymer layer, said polymer layer is extrusion coated on the substrate, wherein the polymer layer comprises a composition (Co) comprising a low density polyethylene (LDPE) and a primary antioxidant (PAO), wherein
the polymer layer and/or the composition (Co) has/have a melt flow rate $MFR_2$ (190 °C) of at least 2.0 g/10min, and wherein further the melt flow rate $MFR_2$ (190 °C) of the composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

2. Article according to claim 1, wherein the amount of primary antioxidant (PAO) is in the range of 15 to 2,500 ppm and optionally at least in an amount preventing a change of the melt flow rate $MFR_2$ (190 °C) ofthe composition (Co) during extrusion coating of more than 40 %.

**3.** Article comprising a substrate and at least one polymer layer, said polymer layer is extrusion coated on the substrate, wherein the polymer layer comprises a composition (Co) comprising a low density polyethylene (LDPE) and a primary antioxidant (PAO), wherein
the polymer layer and/or the composition (Co) has/have a melt flow rate $MFR_2$ (190 °C) of at least 2.0 g/10min, wherein further the amount of primary antioxidant (PAO) is in the range of 15 to 2,500 ppm and at least in an amount preventing a change of the melt flow rate $MFR_2$ (190 °C) ofthe composition (Co) during extrusion coating of more than 40 %.

**4.** Article according to claim 3, wherein melt flow rate $MFR_2$ (190 °C) of the composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

**5.** Article according to one the preceding claims, wherein the primary antioxidant (PAO) is a sterically hindered phenol, preferably is a sterically hindered phenol comprising at least the residue

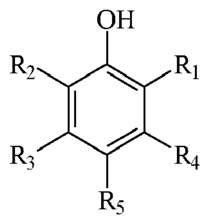

wherein
$R_1$ and $R_2$ are independently selected from the group consisting of H, $CH_3$, $CH_2(CH_2)_nCH_3$, $C(CH_3)_3$, and $CH(CH_3)_2$, with n = 0 to 5 and with the proviso that only either $R_1$ or $R_2$ can be H, and
$R_3$, $R_4$, $R_5$ are independently H or an organic residue.

**6.** Article according to one the preceding claims, wherein

(a) the primary antioxidant (PAO) is selected from the group consisting of 2,6-di-tert. butyl -4-methyl phenol, pentaerythrityl-tetrakis(3-(3',5'-di-tert. butyl-4-hydroxyphenyl)-propionate, octadecyl 3-(3',5'-di-tert. butyl-4-hydroxyphenyl)propionate, 1,3,5-tri-methyl-2,4,6-tris-(3,5-di-tert. butyl-4-hydroxyphenyl) benzene, 1,3,5-tris(3',5'-di-tert. butyl-4'-hydroxybenzyl)-isocyanurate, bis-(3,3-bis-(4-'-hydroxy-3'-tert. butylphenyl)butanic acid)-glycolester, N,N'-hexamethylene bis(3,5-di-tert. butyl-4-hydroxyhydrocinnamamide, 2,5,7,8-Tetramethyl-2(4',8',12'-trimethyltridecyl)chroman-6-ol, 2,2'-ethylidenebis (4,6-di-tert. butylphenol), 1,1,3-tris (2-methyl-4-hydroxy-5-tert. butylphenyl) butane, 1,3,5-tris(4-tert. butyl-3-hydroxy-2,6-dimethylbenzyl)-1,3,5-triazine-2,4,6-(1H,3H,5H)-trione, 3,9-bis(1,1-dimethyl-2-(beta-(3-tert. butyl-4-hydroxy-5-methylphenyl) propionyloxy) ethyl) - 2,4,8,10-tetraoxaspiro (5,5) undecane, 1,6-hexanediyl-bis(3,5-bis(1,1-dimethylethyl)-4-hydroxybenzenepropanoate), 2,6-di-tert. butyl-4-nonylphenol, 4,4'-butylidenebis(6-tert. butyl-3-methylphenol), 2,2'-methylene bis(4-methyl-6-tert. butylphenol), and triethyleneglycol- bis-(3-tert. butyl-4-hydroxy-5 methylphenyl) propionate.
and/or
(b) the polymer layer and/or the composition (Co) does/do not contain secondary antioxidants (SAO).

**7.** Article according to one the preceding claims, wherein

(a) the low density polyethylene (LDPE) is the only polymer in the polymer layer and/or in the composition (Co), and/or
(b) the low density polyethylene (LDPE) has a density of below 960 $kg/m^3$.

**8.** Article according to one the preceding claims, wherein the composition (Co) has a melt flow rate $MFR_2$ (190 °C)

(a) before extrusion coating of at least 2.5 g/10min
and/or
(b) after extrusion coating of at least 2.1 g/10min.

**9.** Article according to one the preceding claims, wherein polymer layer has a thickness in the range of 5 to 1,000 μm.

**10.** A process of extrusion coating a substrate with a draw-down speed of at least 300 m/min by extruding a composition (Co) in a molten state through a flat die onto said substrate at a temperature of from 275 to 330 °C, wherein said composition (Co) comprises low density polyethylene (LDPE) and from 15 to 2,500 ppm of a primary antioxidant (PAO).

**11.** Process according to claim 10, wherein the composition (Co) comprises the primary antioxidant (PAO) at least in an amount of

(a) preventing a change ofthe melt flow rate $MFR_2$ (190 °C) ofthe composition (Co) during extrusion coating of more than 40 %, i.e. the change ofthe melt flow rate $MFR_2$ (190 °C) of the composition (Co) during extrusion coating is

$$\left| [(\text{MFR (before)} - \text{MFR (after)})/\text{MFR (before)}]\text{x}100 \right| \leq 40,$$

i.e. equal or below 40 %, wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,
and/or
(b) that the melt flow rate $MFR_2$ (190 °C) ofthe composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating.

**12.** A process of extrusion coating a substrate by extruding a composition (Co) in a molten state through a flat die onto said substrate at a temperature of from 275 to 330 °C, wherein said composition (Co) comprises low density polyethylene (LDPE) and from 15 to 2,500 ppm of a primary antioxidant (PAO),
wherein further the amount of primary antioxidant (PAO) is at least in an amount of

(a) preventing a change ofthe melt flow rate $MFR_2$ (190 °C) ofthe composition (Co) during extrusion coating of more than 40 %, i.e. the change ofthe melt flow rate $MFR_2$ (190 °C) of the composition (Co) during extrusion coating is,

$$\left| [(\text{MFR (before)} - \text{MFR (after)})/\text{MFR (before)}]\text{x}100 \right| \leq 40,$$

i.e. equal or below 40 %, wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,
and/or
(b) that the melt flow rate $MFR_2$ (190 °C) ofthe composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,

wherein optionally the draw-down speed is of at least 300 m/min, preferably in the range of 300 m/min to 800 m/min.

**13.** Process according to any one the preceding claims 10 to 12, wherein

(a) the polymer layer has a thickness in the range of 5 to 1,000 μm, and/or
(b) the polymer layer, the composition (Co) and/or the low density polyethylene (LDPE) has/have a melt flow rate $MFR_2$ (190 °C) of at least 2.0 g/10min
and/or
(c) the low density polyethylene (LDPE) is only polymer in the polymer layer and/ or in the composition (Co).
and/or
(d) the low density polyethylene (LDPE) has a density of below 960 kg/m$^3$, and/or
(e) the primary antioxidant (PAO) is a sterically hindered phenol, preferably is a sterically hindered phenol comprising at least the residue

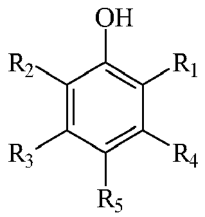

wherein
$R_1$ and $R_2$ are independently selected from the group consisting of H, $CH_3$, $CH_2(CH_2)_nCH_3$, $C(CH_3)_3$, and $CH(CH_3)_2$, with n = 0 to 5 and with the proviso that only either $R_1$ or $R_2$ can be H, and
$R_3$, $R_4$, $R_5$ are independently H or an organic residue,
preferably the primary antioxidant (PAO) is selected from the group consisting of 2,6-di-tert. butyl -4-methyl phenol, pentaerythrityl-tetrakis(3-(3',5'-di-tert. butyl-4-hydroxyphenyl)-propionate, octadecyl 3-(3',5'-di-tert. butyl-4-hydroxyphenyl)propionate, 1,3,5-tri-methyl-2,4,6-tris-(3,5-di-tert. butyl-4-hydroxyphenyl) benzene, 1,3,5-tris(3',5'-di-tert. butyl-4'-hydroxybenzyl)-isocyanurate, bis-(3,3-bis-(4-'-hydroxy-3'-tert. butylphenyl)butanic acid)-glycolester, N,N'-hexamethylene bis(3,5-di-tert. butyl-4-hydroxy-hydrocinnamamide, 2,5,7,8-Tetramethyl-2(4',8',12'-trimethyltridecyl)chroman-6-ol, 2,2'-ethylidenebis (4,6-di-tert. butylphenol), 1,1,3-tris (2-methyl-4-hydroxy-5-tert. butylphenyl) butane, 1,3,5-tris(4-tert. butyl-3-hydroxy-2,6-dimethylbenzyl)-1,3,5-triazine-2,4,6-(1H,3H,5H)-trione, 3,9-bis(1,1-dimethyl-2-(beta-(3-tert. butyl-4-hydroxy-5-methylphenyl) propionyloxy) ethyl) - 2,4,8,10-tetraoxaspiro (5,5) undecane, 1,6-hexanediyl-bis(3,5-bis(1,1-dimethylethyl)-4-hydroxybenzenepropanoate), 2,6-di-tert. butyl-4-nonylphenol, 4,4'-butylidenebis(6-tert. butyl-3-methylphenol), 2,2'-methylene bis(4-methyl-6-tert. butylphenol), and triethyleneglycol- bis-(3-tert. butyl-4-hydroxy-5 methylphenyl) propionate,
and/or
(f) the polymer layer and/or the composition (Co) does/do not contain secondary antioxidants (SAO).

**14.** Use of a primary antioxidant (PAO) in a low density polyethylene (LDPE) or in a composition (Co) comprising a low density polyethylene (LDPE) to prevent a change in melt flow rate $MFR_2$ (190 °C) of the low density polyethylene (LDPE) or of the composition (Co) during extrusion coating of a substrate, wherein preferably

(a) the change ofthe melt flow rate $MFR_2$ (190 °C) of low density polyethylene (LDPE) or of the composition (Co) during extrusion coating is not more than 40 %, i.e. the change ofthe melt flow rate $MFR_2$ (190 °C) of the low density polyethylene (LDPE) or ofthe composition (Co) during extrusion coating is,

$$\left| [(\text{MFR (before)} - \text{MFR (after)})/\text{MFR (before)}]\text{x}100 \right| \leq 40,$$

i.e. equal or below 40 %,
wherein
MFR (after) is the melt flow rate $MFR_2$ (190 °C) of the composition (Co) after extrusion coating;
MFR (before) is the melt flow rate $MFR_2$ (190 °C) of the composition (Co) before extrusion coating,
and/or
(b) that the melt flow rate $MFR_2$ (190 °C) ofthe low density polyethylene (LDPE) or of the composition (Co) before and after extrusion are substantially the same, i.e.

$$1.5 \geq \frac{MFR\ (after)}{MFR\ (before)} \geq 0.5$$

wherein
MFR (after) is the melt flow rate $MFR_2$ (190 °C) of the low density polyethylene (LDPE) after extrusion coating or of the composition (Co) after extrusion coating;
MFR (before) is the melt flow rate $MFR_2$ (190 °C) of the low density polyethylene (LDPE) before extrusion coating or of the composition (Co) before extrusion coating.

**15.** Use of a primary antioxidant (PAO) for increasing the drawdown speed of a low density polyethylene (LDPE) or of a composition (Co) comprising a low density polyethylene (LDPE) in an extrusion coating process of substrate, wherein preferably the increase of drawdown speed is at least 20 %, determined as the undeckeled drawdown speed at which the extruded polymer film breaks, the percentage is calculated by the formula

$$\frac{DD(LDPE + PAO) - DD(LDPE)}{DD(LDPE)}\ x\ 100$$

wherein

DD(LDPE) is the undeckeled drawdown speed [m/min] at which the polymer film breaks, the polymer film is obtained from the composition (Co) without the primary antioxidant (PAO) or from the low density polyethylene (LDPE) without the primary antioxidant (PAO),
DD(LDPE + PAO) is the undeckeled drawdown speed [m/min] at which the polymer film breaks, the polymer film is obtained from the same composition (Co) containing the primary antioxidant (PAO) or from the same low density polyethylene (LDPE) containing the primary antioxidant (PAO).

**16.** Use according to claim 14 or 15, wherein

(a) the low density polyethylene (LDPE) has a melt flow rate $MFR_2$ (190 °C) of at least 2.0 g/10min
and/or
(b) the low density polyethylene (LDPE) is only polymer in the polymer layer and/or in the composition (Co).
and/or
(c) the low density polyethylene (LDPE) has a density of below 960 kg/$m^3$, and/or
(d) the primary antioxidant (PAO) is a sterically hindered phenol, preferably is a sterically hindered phenol comprising at least the residue

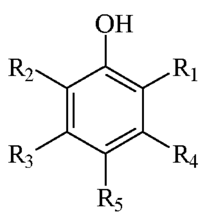

wherein

$R_1$ and $R_2$ are independently selected from the group consisting of H, $CH_3$, $CH_2(CH_2)_nCH_3$, $C(CH_3)_3$, and $CH(CH_3)_2$, with n = 0 to 5 and with the proviso that only either $R_1$ or $R_2$ can be H, and

$R_3$, $R_4$, $R_5$ are independently H or an organic residue,

preferably the primary antioxidant (PAO) is selected from the group consisting of 2,6-di-tert. butyl -4-methyl phenol, pentaerythrityl-tetrakis(3-(3',5'-di-tert. butyl-4-hydroxyphenyl)-propionate, octadecyl 3-(3',5'-di-tert. butyl-4-hydroxyphenyl)propionate, 1,3,5-tri-methyl-2,4,6-tris-(3,5-di-tert. butyl-4-hydroxyphenyl) benzene, 1,3,5-tris(3',5'-di-tert. butyl-4'-hydroxybenzyl)-isocyanurate, bis-(3,3-bis-(4-'-hydroxy-3'-tert. butylphenyl)butanic acid)-glycolester, N,N'-hexamethylene bis(3,5-di-tert. butyl-4-hydroxy-hydrocinnamamide, 2,5,7,8-Tetramethyl-2(4',8',12'-trimethyltridecyl)chroman-6-ol, 2,2'-ethylidenebis (4,6-di-tert. butylphenol), 1,1,3-tris (2-methyl-4-hydroxy-5-tert. butylphenyl) butane, 1,3,5-tris(4-tert. butyl-3-hydroxy-2,6-dimethylbenzyl)-1,3,5-triazine-2,4,6-(1H,3H,5H)-trione, 3,9-bis(1,1-dimethyl-2-(beta-(3-tert.butyl-4-hydroxy-5-methylphenyl) propionyloxy) ethyl) - 2,4,8,10-tetraoxaspiro (5,5) undecane, 1,6-hexanediyl-bis(3,5-bis(1,1-dimethylethyl)-4-hydroxybenzenepropanoate), 2,6-di-tert. butyl-4-nonylphenol, 4,4'-butylidenebis(6-tert. butyl-3-methylphenol), 2,2'-methylene bis(4-methyl-6-tert. butylphenol), and triethyleneglycol- bis-(3-tert. butyl-4-hydroxy-5 methylphenyl) propionate,

and/or

(f) the low density polyethylene (LDPE) does not contain secondary antioxidants (SAO).

and/or

(g) the extrusion coating is operated at a drawdown speed of more than 300 m/min.

Europäisches Patentamt
European Patent Office
Office européen des brevets

# EUROPEAN SEARCH REPORT

Application Number
EP 12 15 6515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/066469 A1 (DOW GLOBAL TECHNOLOGIES INC [US]; OSWALD THOMAS [US]; KONZE WAYDE V [U) 3 June 2011 (2011-06-03)<br>* paragraphs [0003], [0058]; tables 5a,5b * | 1-16 | INV.<br>C08K5/13<br>B32B27/18<br>B32B27/32 |
| X<br>A | EP 0 052 889 A1 (UNION CARBIDE CORP [US]) 2 June 1982 (1982-06-02)<br>* page 21, paragraphs 52-53, 64; examples 3,4; tables I-IV * | 3-10,13<br>14,15 | |
| X | JP 2002 042555 A (NIPPON UNICAR CO LTD) 8 February 2002 (2002-02-08)<br>* paragraphs [0003], [0014], [0017], [0027], [0028]; claim 1; tables 1-8; compounds A-1-A-4 * | 1-7,9 | |
| A | US 6 780 954 B2 (LAI SHIH-YAW [US] ET AL) 24 August 2004 (2004-08-24)<br>* paragraphs [0007], [0220], [0256]; examples 28-37 * | 1-16 | |

TECHNICAL FIELDS SEARCHED (IPC)

C08K
B32B

The present search report has been drawn up for all claims

1

| Place of search | Date of completion of the search | Examiner |
|---|---|---|
| The Hague | 31 August 2012 | Jansen, Reinier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 12 15 6515

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2012

| Patent document cited in search report | Publication date | Patent family member(s) | Publication date |
|---|---|---|---|
| WO 2011066469 A1 | 03-06-2011 | AR 079122 A1 | 28-12-2011 |
| | | TW 201121998 A | 01-07-2011 |
| | | US 2011124254 A1 | 26-05-2011 |
| | | WO 2011066469 A1 | 03-06-2011 |
| EP 0052889 A1 | 02-06-1982 | AR 229940 A1 | 31-01-1984 |
| | | AU 551850 B2 | 15-05-1986 |
| | | AU 7777381 A | 03-06-1982 |
| | | BR 8107624 A | 24-08-1982 |
| | | CA 1196141 A1 | 29-10-1985 |
| | | DE 3174738 D1 | 03-07-1986 |
| | | DK 523281 A | 27-05-1982 |
| | | EP 0052889 A1 | 02-06-1982 |
| | | ES 8207037 A1 | 01-12-1982 |
| | | GR 76303 A1 | 04-08-1984 |
| | | IE 51943 B1 | 29-04-1987 |
| | | IN 155885 A1 | 23-03-1985 |
| | | JP 57117547 A | 22-07-1982 |
| | | NO 813973 A | 27-05-1982 |
| | | US 4339507 A | 13-07-1982 |
| | | ZA 8107736 A | 27-10-1982 |
| JP 2002042555 A | 08-02-2002 | JP 4512239 B2 | 28-07-2010 |
| | | JP 2002042555 A | 08-02-2002 |
| US 6780954 B2 | 24-08-2004 | CA 2120766 A1 | 29-04-1993 |
| | | DE 9219090 U1 | 25-09-1997 |
| | | DE 9219173 U1 | 25-03-1999 |
| | | DE 69220077 D1 | 03-07-1997 |
| | | DE 69220077 T2 | 20-11-1997 |
| | | DE 69228265 D1 | 04-03-1999 |
| | | DE 69228265 T2 | 02-06-1999 |
| | | EP 0608369 A1 | 03-08-1994 |
| | | EP 0783006 A2 | 09-07-1997 |
| | | EP 0899278 A2 | 03-03-1999 |
| | | EP 0899279 A2 | 03-03-1999 |
| | | ES 2103976 T3 | 01-10-1997 |
| | | ES 2127030 T3 | 01-04-1999 |
| | | FI 941727 A | 31-05-1994 |
| | | FI 20030362 A | 11-03-2003 |
| | | JP 2963199 B2 | 12-10-1999 |
| | | JP H07500622 A | 19-01-1995 |
| | | KR 100262024 B1 | 15-07-2000 |
| | | TW 448186 B | 01-08-2001 |
| | | US 5278272 A | 11-01-1994 |
| | | US 6348555 B1 | 19-02-2002 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 12 15 6515

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2012

| Patent document cited in search report | Publication date | Patent family member(s) | Publication date |
|---|---|---|---|
| | | US 6506867 B1 | 14-01-2003 |
| | | US 6534612 B1 | 18-03-2003 |
| | | US 2003078357 A1 | 24-04-2003 |
| | | US 2003195320 A1 | 16-10-2003 |
| | | WO 9308221 A2 | 29-04-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 96016119 A
- EP 1777238 A
- EP 1167396 A
- DE 10351262 A
- WO 2007134671 A
- WO 200713467 A
- EP 2123707 A


### Non-patent literature cited in the description


- **R.A.V. RAFF ; K.W. DOAK.** Crystalline Olefin Polymers. Interscience Publishers, 1964, 478-4844
- **DOMINICK V. ROSATO.** Plastics Processing Data Handbook. Chapman & Hall, 1997, 273-277
- **VIEWEG ; SCLEY ; SCHWARTZ.** Kunststoff Handbuch, Band IV, Polyolefine. Carl Hanser Verlag, 1969, 39-51
- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184